(19) Europäisches Patentamt / European Patent Office / Office européen des brevets

(11) **EP 3 910 037 A1**

(12) **EUROPEAN PATENT APPLICATION**
published in accordance with Art. 153(4) EPC

(43) Date of publication:
**17.11.2021 Bulletin 2021/46**

(21) Application number: **20872781.8**

(22) Date of filing: **28.09.2020**

(51) Int Cl.:
*C09J 133/04* (2006.01)    *C09J 4/00* (2006.01)
*C09J 7/38* (2018.01)    *C08F 2/44* (2006.01)
*C08F 220/18* (2006.01)    *C08F 220/04* (2006.01)
*C08K 5/25* (2006.01)    *C08K 5/00* (2006.01)
*C08K 5/20* (2006.01)

(86) International application number:
**PCT/KR2020/013199**

(87) International publication number:
**WO 2021/066448 (08.04.2021 Gazette 2021/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2019 KR 20190121166**

(71) Applicant: **LG Chem, Ltd.**
**Seoul 07336, (KR)**

(72) Inventors:
• **CHO, Hyunju**
**Daejeon 34122 (KR)**
• **LEE, Yong Man**
**Daejeon 34122 (KR)**
• **RYU, Jin Young**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ACRYLIC EMULSION ADHESIVE COMPOSITION**

(57) Provided is an acrylic emulsion pressure-sensitive adhesive composition that remains no residues on an adherend, when the pressure-sensitive adhesive is removed after long-term storage, and is easily peeled off, while exhibiting excellent adhesive strength.

EP 3 910 037 A1

**Description**

## BACKGROUND OF THE INVENTION

**(a) Field of the Invention**

Cross-reference to Related Application(s)

The present application is based on, and claims priority from, Korean Patent Application No. 10-2019-0121166, filed on September 30, 2019, the disclosure of which is hereby incorporated by reference herein in its entirety. The present invention relates to an acrylic emulsion pressure-sensitive adhesive composition.

**(b) Description of the Related Art**

Recently, sticker-type surface finishing materials such as interior/exterior materials of buildings, interior design materials, advertising materials, etc., in which pressure-sensitive adhesives (PSAs) are employed, have been increasingly used. Traditional oil-based pressure-sensitive adhesives as the pressure-sensitive adhesives incur discharge of residual solvents into air for a long period of time after construction, and thus residents of buildings suffer symptoms such as headache, eye, nose, and throat irritation, cough, itching, dizziness, fatigue, reduction in concentration, etc., and long-term exposure to such residual solvents may generate a problem of sick house syndrome that causes respiratory ailments, heart disease, cancer, etc. For such reasons, water-based emulsion pressure-sensitive adhesives, which are environmentally friendly by using water as a dispersion medium and do not discharge harmful materials to human body, have received much attention and are rapidly replacing oil-based adhesives. Such water-based emulsion pressure-sensitive adhesives may employ polymers having higher molecular weight than that of solvent-based polymers because viscosity of the pressure-sensitive adhesive is not related to molecular weights of polymers as dispersions, may have broad concentration ranges of solid content, have low aging resistance, low viscosity, and good adhesive strength in a low solid content region, and have good compatibility with other polymers. However, due to use of water as a solvent, such water-based emulsion pressure-sensitive adhesives have problems of a slow drying rate, low adhesive strength to hydrophobic adhesive surfaces and non-porous adherend, narrow ranges of selection of curing agents, and deteriorated initial adhesive strength. In addition, water-based emulsion pressure-sensitive adhesives include emulsifiers and dispersants, and thus have no superior physical properties, such as low water resistance, etc., to those of oil-based pressure-sensitive adhesive. In particular, the water-based pressure-sensitive adhesive for clothing is difficult to exhibit adhesive properties due to a lot of dust on the clothing fabric itself, and in many cases, after attaching, the pressure-sensitive adhesive is more attached to the fabric than the label. It is necessary to develop a pressure-sensitive adhesive that has excellent adhesive strength with respect to fabrics for clothing while exhibiting a characteristic of being cleanly removed from a substrate. Such two properties are incompatible with each other. Thus, when any one property is enhanced, the other is deteriorated. Accordingly, there is a problem in that both of them are not satisfied at the same time. In addition, the pressure-sensitive adhesive is easily exposed to high-temperature and high-humidity environment in the process of shipping and moving in an export container after being attached to the clothing substrate. During this process, there is a problem in that the pressure-sensitive adhesive is strongly adhered to the clothing. In the case of traditional water-based pressure-sensitive adhesives for clothing, the aging peel strength rapidly increases to about 3 times to about 5 times the initial peel strength, thereby causing damages to the clothing.

## SUMMARY OF THE INVENTION

**[Technical Problem]**

There is provided an acrylic emulsion pressure-sensitive adhesive composition that remains no residues on an adherend, when the pressure-sensitive adhesive is removed after long-term storage, and is easily peeled off, while exhibiting excellent adhesive strength.

**[Technical Solution]**

According to one embodiment of the present invention, there is provided an acrylic emulsion pressure-sensitive adhesive composition including an emulsion polymer of a monomer mixture including a (meth)acrylic acid ester-based first monomer including an alkyl group having 1 to 14 carbon atoms and an unsaturated carboxylic acid-based second monomer; an external crosslinking agent including diacetone acrylamide and adipic acid dihydrazide; an internal crosslinking agent; and a polymerization initiator,

wherein a gel content(%) represented by the following Equation 1 is 60% to 85%,

a sol content(%) represented by the following Equation 2 is 15% to 40%, and

a content of a sol having a weight average molecular weight of less than 100,000 g/mol with respect to the total sol content is less than 70% by weight:

[Equation 1]

$$Gel\ content(\%)= (G2\ /\ G1)\ X\ 100$$

[Equation 2]

$$Sol\ content(\%)= (G1\ -\ G2)\ /\ G1\ X\ 100$$

in equations, G1 represents the weight after drying the acrylic emulsion pressure-sensitive adhesive composition, and G2 represents the dry weight of insolubles which are separated by filtration using a 325 mesh, after drying the acrylic pressure-sensitive adhesive composition and immersing the dry product in tetrahydrofuran for 24 hours.

According to another embodiment of the present invention, there is provided a method of preparing an acrylic emulsion pressure-sensitive adhesive composition, the method including:

the step 1 of preparing a pre-emulsion by mixing a monomer mixture including a (meth)acrylic acid ester-based first monomer including an alkyl group having 1 to 14 carbon atoms and an unsaturated carboxylic acid-based second monomer, an internal crosslinking agent, an emulsifier, and a solvent; and

the step 2 of preparing an acrylic emulsion resin by mixing the prepared pre-emulsion with an external crosslinking agent including diacetone acrylamide and adipic acid dihydrazide, and a polymerization initiator, and then performing an emulsion polymerization of the mixture,

wherein the acrylic emulsion pressure-sensitive adhesive composition satisfies the above-described physical properties.

Further, according to still another embodiment of the present invention,
there is provided an adhesive member including a substrate; and an adhesive layer which is formed on at least one surface of the substrate, wherein the adhesive layer is formed using the composition prepared by the above-described method.

**[Advantageous Effects]**

An acrylic emulsion pressure-sensitive adhesive composition according to the present invention may realize a stable residue property when a pressure-sensitive adhesive is removed, together with effective adhesive strength with respect to an adherend, by minimizing an adhesive strength build-up phenomenon, in which adhesive strength rapidly increases after long-term storage, while exhibiting excellent adhesive strength by optimizing a monomer composition and compositions of an external crosslinking agent, an internal crosslinking agent, and a polymerization initiator and by controlling a gel content and a sol content in an emulsion resin.

**DETAILED DESCRIPTION OF THE EMBODIMENTS**

In the present invention, the terms "the first", "the second", and the like are used to describe a variety of components, and these terms are merely employed to differentiate a certain component from other components.
Further, the terms used in this description are just for explaining exemplary embodiments and it is not intended to restrict the present invention.
The singular expression may include the plural expression unless it is differently expressed contextually.

It must be understood that the term "include", "equip", or "have" in the present description is only used for designating the existence of characteristics taken effect, numbers, steps, components, or combinations thereof, and do not exclude the existence or the possibility of addition of one or more different characteristics, numbers, steps, components or combinations thereof beforehand.

Further, in the present specification, when a layer or an element is mentioned to be formed "on" or "above" layers or elements, it means that each layer or element is directly formed on the layers or elements, or other layers or elements may be formed between the layers, subjects, or substrates.

While the present invention is susceptible to various modifications and alternative forms, specific embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, the present invention will be described in detail.

The present inventors found that, during a process of polymerizing a pressure-sensitive adhesive latex resin, i.e., acrylic emulsion resin for clothing, when a monomer composition and a composition of an external crosslinking agent are optimized and used, and a gel content and a sol content in the composition are controlled, it is possible to realize excellent adhesive property and residue property.

<Acrylic emulsion pressure-sensitive adhesive composition>

An acrylic emulsion pressure-sensitive adhesive composition according to one exemplary embodiment of the present invention includes an emulsion polymer of a monomer mixture including a (meth)acrylic acid ester-based first monomer including an alkyl group having 1 to 14 carbon atoms and an unsaturated carboxylic acid-based second monomer; an external crosslinking agent including diacetone acrylamide and adipic acid dihydrazide; an internal crosslinking agent; and a polymerization initiator, wherein a gel content(%) represented by the following Equation 1 is 60% to 85%, a sol content(%) represented by the following Equation 2 is 15% to 40%, and a content of a sol having a weight average molecular weight of less than 100,000 g/mol with respect to the total sol content is less than 70% by weight.

The acrylic emulsion pressure-sensitive adhesive composition according to one exemplary embodiment may realize a stable residue property when the pressure-sensitive adhesive is removed, together with effective adhesive strength with respect to an adherend, by minimizing an adhesive strength build-up phenomenon, in which adhesive strength rapidly increases after long-term storage, while exhibiting excellent adhesive strength by introducing a repeating unit derived from a particular monomer composition and a crosslinking structure derived from a particular crosslinking agent component and by controlling three physical properties of the gel content, the sol content, and the low-molecular-weight sol content.

The gel content and the sol content are a measure of the self-cohesive force of the pressure-sensitive adhesive composition, indicating that the adhesion may be maintained at an appropriate level without transferring the pressure-sensitive adhesive composition to the adherend.

Specifically, the gel content and the sol content are measured by the following methods:

$$[\text{Equation 1}]$$

$$\text{Gel content(\%)} = (G2 / G1) \times 100$$

$$[\text{Equation 2}]$$

$$\text{Sol content(\%)} = (G1-G2) / G1 \times 100$$

in equations, G1 represents the weight after drying the acrylic emulsion pressure-sensitive adhesive composition at about 110°C for about 1 hour, and G2 represents the weight of insolubles after drying at about 110°C for about 1 hour, in which the insolubles are obtained by drying the acrylic pressure-sensitive adhesive composition and immersing the dry product in tetrahydrofuran for 24 hours, followed by filtration using an about 325 mesh.

The sol content means solubles obtained by immersing the dry product of the acrylic pressure-sensitive adhesive composition in tetrahydrofuran for 24 hours. Part of the gel of fine particles, which are insolubles of about 325 mesh or less, may be included in the solubles. However, the insolubles are included in a very small amount, which does not affect properties of the sol.

When the gel content is excessively high outside the range of 60% to 85%, the self-cohesive force inside the pressure-sensitive adhesive composition becomes too high and it is apprehended that adhesive strength deteriorates. When the gel content is excessively low outside the range, the self-cohesive force inside the pressure-sensitive adhesive composition becomes too low and thus adhesive strength increases, but it is apprehended that the pressure-sensitive adhesive may be transferred to an adherend.

More specifically, the gel content of the acrylic emulsion pressure-sensitive adhesive composition is 65% to 80%, or 67% to 80%, and when the gel content is within the above range, physical properties of the acrylic emulsion pressure-sensitive adhesive composition may be further improved.

When the sol content is excessively high outside the range of 15% to 40%, the self-cohesive force inside the pressure-sensitive adhesive composition becomes too low and thus adhesive strength increases, but it is apprehended that the pressure-sensitive adhesive may be transferred to an adherend. When the sol content is excessively low outside the range, the self-cohesive force inside the pressure-sensitive adhesive composition becomes too high and it is apprehended that adhesive strength deteriorates.

More specifically, the sol content of the acrylic emulsion pressure-sensitive adhesive composition is 20% to 35%, or 20% to 33%, and when the sol content is within the above range, physical properties of the acrylic emulsion pressure-sensitive adhesive composition may be further improved.

Next, in the sol, a sol having a weight average molecular weight of less than 100,000 g/mol is a particle having a relatively small weight average molecular weight, and is an indicator of the occurrence of adhesive strength build-up, in which the adhesive strength rapidly increases during long-term storage.

The weight average molecular weight (Mw) and molecular weight distribution (PDI) of the sol may be measured using GPC.

In detail, when the above-described gel content is measured, the composition is immersed in tetrahydrofuran, and the filtered residues (solubles) are collected and measured. The residues are diluted at an appropriate concentration, and filtered to prepare a gel permeation chromatography (GPC) sample, and then the weight average molecular weight (Mw) and molecular weight distribution (PDI) are measured using GPC under the following conditions.

For the generation of a calibration curve, the measurement results are converted using polystyrene standards of the Agilent system.

<Measurement conditions>

Measuring instrument: Agilent GPC (Agilent 1200 series, USA)

Column: two PL Mixed B connected

Column temperature: 40°C

Eluent: Tetrahydrofuran

Flow rate: 1.0 mL/min

Concentration: ~ 1 mg/mL (100 μL injection)

The sol content of a weight average molecular weight of less than 100,000 g/mol may be calculated using the molecular weight distribution (PDI) value. In detail, the sol content may be calculated using the following equation: on the molecular weight distribution curve, (the area of the low molecular weight of less than 100,000 g/mol / the total area) * 100.

The content of the sol particles having a relatively low molecular weight of less than 100,000 g/mol is less than 70% with respect to the total sol content, thereby minimizing occurrence of the adhesive strength build-up during long-term storage.

When the content of the low-molecular-weight sol particles is 70% or more, the adhesive strength build-up becomes severe during long-term storage, and thus residues may be generated on a substrate when removed.

In the acrylic emulsion pressure-sensitive adhesive composition, the sol content of a weight average molecular weight of less than 100,000 g/mol is preferably less than 65% with respect to the total sol content, and when the sol content is within the above range, physical properties of the acrylic emulsion pressure-sensitive adhesive composition may be further improved.

Meanwhile, the physical properties of the pressure-sensitive adhesive composition may be influenced by physical properties such as the gel content, the sol content, the low-molecular-weight sol content, glass transition temperature (Tg) of the acrylic emulsion resin, and when the kind and content of the monomers, the kind and content of other additives (e.g., a crosslinking agent, a polymerization initiator, etc.), and ratios therebetween are controlled, the physical properties of the pressure-sensitive adhesive composition may be further improved. Moreover, since there is a trade-off relationship between the adhesive strength and peelability of the pressure-sensitive adhesive composition, a balance between both the physical properties may be improved by controlling the above ratios.

Hereinafter, compositions of the monomer mixture and other additives realizing the above-described three physical properties will be described in detail.

Monomer mixture

The acrylic emulsion pressure-sensitive adhesive composition according to one exemplary embodiment of the present invention may include an emulsion polymer derived from a particular monomer mixture, i.e., latex particles, wherein each monomer may exist in the form of a repeating unit derived from the monomer in the latex particles.

As used herein, the term "monomer mixture" refers to a state in which one or more monomers described below are mixed together, based on acrylic monomers. The monomer mixture may be prepared by introducing one or more monomers at the same time or by introducing the monomers sequentially, and thus the preparation method thereof is not limited.

In the acrylic emulsion pressure-sensitive adhesive composition according to one exemplary embodiment, a (meth)acrylic acid ester-based monomer including an alkyl group having 1 to 14 carbon atoms may be used, which may be referred to as a first monomer. Therefore, the latex particles may include a repeating unit derived from the (meth)acrylic acid ester-based monomer including an alkyl group having 1 to 14 carbon atoms, which may be referred to as a first repeating unit.

The first monomer may specifically include methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, octyl (meth)acrylate, isooctyl (meth)acrylate, 2-ethylhexyl (meth)acrylate, decyl (meth)acrylate, isodecyl (meth)acrylate, dodecyl (meth)acrylate, isobornyl (meth)acrylate, lauryl (meth)acrylate, etc., and these compounds may be used alone or in a mixture of two or more thereof.

The first monomer may be included in an amount of 90% by weight to 99.7% by weight, and preferably, 95% by weight to 99.7% by weight, or 97% by weight to 99.5% by weight, based on the total weight of the monomer mixture. When the first monomer is included in an amount of less than 90% by weight, it may be difficult to secure initial adhesive strength.

In this point of view, as the first monomer, 5% by weight to 30% by weight of methyl(meth)acrylate, 10% by weight to 50% by weight of butyl(meth)acrylate, and 30% by weight to 80% by weight of 2-ethylhexyl(meth)acrylate may be included, based on the total weight of the first monomer, and when the monomers are used by controlling the content thereof in the above range, physical properties of the pressure-sensitive adhesive composition may be further improved, and physical properties of gel and sol may be controlled to a desired appropriate range.

In the acrylic emulsion pressure-sensitive adhesive composition according to one exemplary embodiment, an unsaturated carboxylic acid-based monomer may be used, which may be referred to as a second monomer. Therefore, the latex particles may include a repeating unit derived from the unsaturated carboxylic acid-based monomer, which may be referred to as a second repeating unit.

The second monomer may specifically include methacrylic acid, fumaric acid, maleic acid, itaconic acid, crotonic acid, citraconic acid, mesaconic acid, glutaconic acid, allylmalonic acid, etc., and these compounds may be used alone or in a mixture of two or more thereof. Preferably, (meth)acrylic acid may be used.

The second monomer may be included in an amount of 0.3% by weight to 10% by weight, or 0.3% by weight to 5% by weight, or 0.5% by weight to 3% by weight, based on the total weight of the monomer mixture. When the monomer is included in an amount of less than 0.3% by weight, there is a concern about deterioration in the adhesion retention and cohesive force of the pressure-sensitive adhesive composition, and when the monomer is included in an amount of more than 10% by weight, there is a concern about deterioration in the peel strength and polymerization stability.

In addition to the above-described first monomer and second monomer, the monomer mixture may further include a comonomer within a range that does not impair the desired effect of the present invention.

The comonomer may be a monomer including a functional group selected from the group consisting of a hydroxy group, an epoxy group, a cyano group, a styrene group, and a vinyl group, and these compounds may be used alone or in a mixture of two or more thereof. The comonomer may be a monomer including one or two or more of a functional group of a hydroxy group, an epoxy group, a cyano group, a styrene group, and a vinyl group.

As one example of the comonomers, the monomer including the hydroxy group may include hydroxyethyl(meth)acrylate, hydroxypropyl(meth)acrylate, hydroxybutyl(meth)acrylate, hydroxypropyl(meth)acrylate, hydroxybutyl(meth)acrylate, hydroxyhexyl(meth)acrylate, hydroxyoctyl(meth)acrylate, hydroxydecyl(meth)acrylate, hydroxylauryl(meth)acrylate, hydroxypropylglycol(meth)acrylate, etc.

The monomer including the epoxy group may include glycidyl methacrylate, allylglycidyl ether, etc.

The monomer including the cyano group may include acrylonitrile, methacrylonitrile, etc.

The styrene-based monomer including the styrene group may include styrene, $\alpha$-methyl styrene, etc.

The vinyl ester-based monomer including the vinyl group may specifically include vinyl acetate, vinyl propionate, vinyl butyrate, vinyl valerate, vinyl caproate, vinyl heptylate, vinyl caprylate, vinyl pelargonate, vinyl laurate, vinyl stearate, vinyl benzoate, vinyl pivalate, vinyl neononanoate, vinyl neodecanoate, vinyl neoundecanoate, vinyl-2-ethylhexanoate, etc.

Crosslinking agent

In the acrylic emulsion pressure-sensitive adhesive composition according to one exemplary embodiment, the emulsion polymer may be polymerized by including a particular crosslinking agent, and thus a specific crosslinking structure may be introduced between the above-described repeating units.

The crosslinking agent may include an internal crosslinking agent and an external crosslinking agent.

The external crosslinking agent may introduce an intercross linker to link between polymers, i.e., a crosslinking structure between polymers, at the end of the polymerization process, thereby effectively controlling adhesive property. Accordingly, even when stored for a long time, it is possible to realize stable residue property when the pressure-sensitive adhesive is removed, together with effective adhesive strength with respect to clothing fabrics.

The external crosslinking agent includes diacetone acrylamide (DAAM) and adipic acid dihydrazide (ADH).

Of the external crosslinking agents, the diacetone acrylamide (DAAM) is a component first introduced, of the two components, and is added to the pre-emulsion to form a primary crosslinking structure.

The diacetone acrylamide is included in an amount of 0.3 parts by weight to 0.9 parts by weight, and preferably, 0.5 parts by weight to 0.8 parts by weight, based on 100 parts by weight of the monomer mixture. In the above range, an appropriate crosslinking structure may be realized, and even when stored for a long time, it is possible to realize stable residue property when the pressure-sensitive adhesive is removed, together with effective adhesive strength with respect to clothing fabrics. Meanwhile, when the diacetone acrylamide is included in an amount of less than 0.3 parts by weight, the degree of crosslinking may become low and residues may remain when removing the pressure-sensitive adhesive. When the diacetone acrylamide is included in an amount of more than 0.9 parts by weight, the degree of crosslinking may become too high, and the adhesive strength may be reduced or residues due to remaining of unreacted materials may be generated.

Of the external crosslinking agents, the adipic acid dihydrazide (ADH) is a component introduced later, of the two components, and is added to form a secondary crosslinking structure, after the primary crosslinking structure between the pre-emulsion and the diacetone acrylamide is formed.

The adipic acid dihydrazide may be included in an amount of 0.15 parts by weight to 0.9 parts by weight, and preferably, 0.3 parts by weight to 0.8 parts by weight, based on 100 parts by weight of the monomer mixture. In the above range, an appropriate crosslinking structure may be realized, and even when stored for a long time, it is possible to realize stable residue property when the pressure-sensitive adhesive is removed, together with effective adhesive strength with respect to clothing fabrics. Meanwhile, when the adipic acid dihydrazide is included in an amount of less than 0.15 parts by weight, the degree of crosslinking may become low and residues may remain when removing the pressure-sensitive adhesive. When the adipic acid dihydrazide is included in an amount of more than 0.9 parts by weight, the degree of crosslinking may become too high, and the adhesive strength may be reduced or residues due to remaining of unreacted materials may be generated.

The internal crosslinking agent, which is a component that effectively controls adhesive property by increasing the degree of crosslinking between monomer components during polymerization, is used, together with the monomer mixture, during the preparation of pre-emulsion. By using the internal crosslinking agent, even when stored for a long time, it is possible to realize stable residue property when the pressure-sensitive adhesive is removed, together with effective adhesive strength with respect to clothing fabrics.

The internal crosslinking agent may include specifically allyl methacrylate, polyethylene glycol diacrylate, polycarbodiimide, allyl-N-methyl carbamate, 1,6-hexanediol diacrylate, hexanediolethoxylate diacrylate, hexanediolpropoxylate diacrylate, pentaerythritolethoxylate triacrylate, pentaerythritolpropoxylate triacrylate, vinyltrimethoxysilane, divinylbenzene, etc., and these compounds may be used alone or in a mixture of two or more thereof.

The internal crosslinking agent may be included in an amount of 0.01 part by weight to 0.06 parts by weight, or 0.01 part by weight to 0.04 parts by weight, based on 100 parts by weight of the monomer mixture. When the internal crosslinking agent is included in an amount of less than 0.01 part by weight, the cohesive force becomes low and residues may remain on the substrate, and when the internal crosslinking agent is included in an amount of more than 0.06 parts by weight, the adhesive strength may be rather reduced.

Polymerization initiator

In the acrylic emulsion pressure-sensitive adhesive composition according to one exemplary embodiment of the present invention, the emulsion polymer may be polymerized by including a particular polymerization initiator.

The polymerization initiator may include potassium persulfate, sodium persulfate, ammonium persulfate, cumene hydroperoxide, benzoyl peroxide, etc., and these compounds may be used alone or in a mixture of two or more thereof.

The polymerization initiator may be included in an amount of 0.15 parts by weight to 0.6 parts by weight or 0.25 parts by weight to 0.55 parts by weight, based on 100 parts by weight of the monomer mixture. When the polymerization initiator is included in an amount of less than 0.15 parts by weight, the cohesive force may increase and the adhesive strength may deteriorate, and when the polymerization initiator is included in an amount of more than 0.6 parts by weight, the adhesive strength may increase, and residues may remain.

Further, the polymerization initiator may be used together with one or more kinds of reducing agents in order to perform the emulsion polymerization reaction at a low temperature, during the emulsion polymerization, but is not limited thereto.

Additives

Meanwhile, according to another embodiment of the present invention, other additives may be included without particular limitation within a range that does not impair the desired effects of the present invention, in addition to the above-described components.

Specifically, the additives may include an emulsifier, a polymerization initiator, a buffer, a wetting agent, a neutralizing agent, a polymerization terminator, and a tackifier, and these compounds may be used alone or in a mixture of two or more thereof.

The emulsifier, which is a material that has a hydrophilic group and a hydrophobic group at the same time, forms a micelle structure during the emulsion polymerization process, and allows polymerization of the respective monomers inside the micelle structure. Thus, initial particle production during the polymerization reaction of the monomer mixture, size adjustment of the produced particles, and particle stability may be further improved.

A non-ionic emulsifier may include polyethylene oxide alkyl aryl ether, polyethylene oxide alkyl amine, polyethylene oxide alkyl ester, etc., and these compounds may be used alone or in a mixture of two or more thereof. A mixture of an anionic emulsifier and the non-ionic emulsifier may be used.

Further, the anionic emulsifier may include sodium alkyl diphenyl ether disulfonate, sodium polyoxyethylene alkyl ether sulfate, sodium polyoxyethylene aryl ether sulfate, sodium alkyl sulfate, sodium alkyl benzene sulfonate, dialkyl sodium sulfosuccinate, etc., and these compounds may be used alone or in a mixture of two or more thereof. A mixture of the anionic emulsifier and the non-ionic emulsifier may be used.

The emulsifier may be used in an amount of 0.1 part by weight to 10 parts by weight or 0.5 parts by weight to 3 parts by weight, based on 100 parts by weight of the monomer mixture. When the amount of the used emulsifier is too small, there is a problem in that stability of the polymerization deteriorates during the emulsion polymerization reaction, and stability of the generated latex particles may also deteriorate. When the amount of the used emulsifier is too large, there is a problem in that, after forming a film, the emulsifier migrates to the surface of the film, and thus the adhesive strength may deteriorate.

The buffer is a component that controls pH in the polymerization reaction and imparts polymerization stability, and may include sodium bicarbonate, sodium carbonate, sodium phosphate, sodium sulfate, sodium chloride, etc., but is not limited thereto.

The wetting agent is a component that acts as an emulsifier to lower the surface tension for coatability, and may include a dioctyl sodium sulfosuccinate (DOSS)-based compound, but is not limited thereto.

The neutralizing agent may include NaOH, $NH_4OH$, KOH, etc., but is not limited thereto.

The polymerization terminator is added to suppress a side reaction of radicals and residual monomers remaining after the preparation of latex, i.e., acrylic emulsion resin, and is an additive that removes the radical to eliminate the additional reaction. The polymerization terminator may also be referred to as a radical inhibitor. It is also referred to simply as an inhibitor. The polymerization terminator is used in order to stop the polymerization reaction by rapidly reacting with radicals, a polymerization initiator or a monomer, to lose characteristics of radical, or in order to preserve a monomer because the radical polymerizable monomer is naturally polymerized when left in a pure state. It is also called a polymerization preventor or a polymerization inhibitor. However, even if the inhibitor is added, when a certain period of time passes, it is consumed in between, so that the polymerization is naturally initiated. Representative inhibitors are hydroquinone and p-tert-butylcatechol. In addition, benzoquinone, chloranil, m-dinitrobenzene, nitrobenzene p-phenyldiamine sulfur, etc., may be exemplified, which are easily reacted with radicals and stabilized. Diphenylpicrylhydrazyl-P-fulolphenylamine and tri-P-nitrophenylmethyl which are stable radicals are also used as inhibitors.

Solvent

According to one exemplary embodiment of the present invention, a solvent, preferably, an aqueous solvent may be further included, in addition to the above-described components.

The aqueous solvent may be used in an amount of about 10 parts by weight to about 1,000 parts by weight with respect to 100 parts by weight of the latex particles in view of controlling stability and viscosity of the latex particles. For example, the aqueous solvent may be used such that a total solid content (TSC) is controlled to about 10% by weight to about 60% by weight, based on the total weight of the composition.

When the solvent is used in an excessively small amount outside the above range, there is a problem in that viscosity of the acrylic emulsion pressure-sensitive adhesive composition increases, and stability of the latex particles deteriorates during emulsion polymerization. When the solvent is used in an excessively large amount outside the above range, there is a problem in that coating property is deteriorated due to reduction of viscosity.

<Method of preparing acrylic emulsion pressure-sensitive adhesive composition>

According to still another embodiment of the present invention, provided is a method of preparing the above-described emulsion pressure-sensitive adhesive composition.

Specifically, provided is a method of preparing an acrylic emulsion pressure-sensitive adhesive composition satisfying the above-described sol and gel properties, the method including:

the step 1 of preparing a pre-emulsion by mixing a monomer mixture including a monomer mixture including a (meth)acrylic acid ester-based first monomer including an alkyl group having 1 to 14 carbon atoms and an unsaturated carboxylic acid-based second monomer, an internal crosslinking agent, an emulsifier, and a solvent; and

the step 2 of preparing an acrylic emulsion resin by mixing the prepared pre-emulsion with an external crosslinking agent including diacetone acrylamide and adipic acid dihydrazide, and a polymerization initiator, and then performing an emulsion polymerization of the mixture.

Hereinafter, each step of the preparation method of the present invention will be described.

Step of preparing pre-emulsion (Step 1)

The step of preparing the pre-emulsion may be performed by taking each of the above-described monomer mixture, internal crosslinking agent, emulsifier, and solvent according to the above-described components and content ranges, and mixing them with each other, followed by stirring for a predetermined time. As the solvent, water may be preferably used.

All the above descriptions may be equally applied to the components and contents of the first monomer, second monomer, and additional comonomer included in the monomer mixture, and all the above descriptions may also be equally applied to the internal crosslinking agent, emulsifier and solvent.

Further, the pre-emulsion may include other additives without particular limitation within a range that does not impair the desired effects of the present invention, in addition to the monomer mixture, emulsifier, and water. For example, the additives may include a surfactant, a buffer, a crosslinking agent, a wetting agent, etc., and may further include one or two or more thereof. The above descriptions may also be equally applied to the components and contents thereof.

Meanwhile, the order of introducing the respective components may affect the effective preparation of the pre-emulsion. Preferably, at the beginning of the polymerization process, the monomer mixture is prepared and stirred, and the separately prepared emulsifier mixture, in which additives such as water, emulsifier, buffer, etc. are dissolved, may be added.

Step of preparing aqueous acrylic emulsion resin (Step 2)

Next, performed is the step 2 of preparing an acrylic emulsion resin by mixing the prepared pre-emulsion with an external crosslinking agent including diacetone acrylamide and adipic acid dihydrazide, and a polymerization initiator, and then performing an emulsion polymerization of the mixture.

In the step, the external crosslinking agent including diacetone acrylamide and adipic acid dihydrazide, the internal crosslinking agent, and the polymerization initiator may be used according to the above-described components and content ranges, and thus it is possible to prepare an acrylic emulsion pressure-sensitive adhesive composition, in which a gel content is 60% to 85%, a sol content is 15 to 40%, and a content of a sol having a weight average molecular weight of less than 100,000 g/mol with respect to the total sol content is less than 70% by weight.

With regard to the step of preparing the acrylic emulsion resin, in order to express the characteristic of the external crosslinking agent of the present invention, a crosslinking point must exist outside the polymer, and thus the reaction may be carried out by introducing the external crosslinking agent into the pre-emulsion at the end of the polymerization. Alternatively, at the time of terminating the polymerization, emulsion polymerization may be carried out in the presence of the external crosslinking agent.

Specifically, the step may include the step 2-1 of introducing the polymerization initiator and diacetone acrylamide as a first external crosslinking agent to the pre-emulsion prepared in the step 1 to perform an emulsion polymerization; the step 2-2 of introducing adipic acid dihydrazide as a second external crosslinking agent to the emulsion polymerization product.

The step 2-1, which is a step of performing the emulsion polymerization, may be performed at a temperature of 70°C to 90°C for 3 hours to 8 hours. In view of the physical properties of the pressure-sensitive adhesive, the polymerization temperature may be 75°C to 85°C. Meanwhile, to reduce residual monomers during the polymerization process, a known stripping process has been applied to remove the residual monomers with water using a vacuum. However, in recent years, the feeding time of the polymerization initiator is prolonged, and aging at a high temperature is further carried out to prolong the time for additional reaction. When the reaction is sustained at a high temperature, the change over time is significantly reduced and a more stable product may be provided.

The step 2-2, in which a crosslinked structure is formed by the second crosslinking agent, may be performed at a temperature of 20°C to 50°C.

Further, for reaction stability, the electrolyte component may be further introduced in the step, and specific components thereof may employ the above-described components without particular limitation. Further, a wetting agent that serves as an emulsifier to decrease surface tension for coating property may be further used. Specific components thereof may employ the components used in the above-described acrylic emulsion resin of the present invention without particular limitation. However, instead of applying a post-process of introducing the electrolyte, the wetting agent, and other additives at room temperature, they may be introduced in the aging state of a high temperature after completion of the polymerization, thereby obtaining a product having stable viscosity and pH.

<Adhesive member>

According to still another exemplary embodiment of the present invention, provided is an adhesive member including a substrate; and an adhesive layer which is formed on at least one surface of the substrate, wherein the adhesive layer is formed using the above-described aqueous acrylic pressure-sensitive adhesive composition of the present invention.

With regard to the adhesive member, a ratio of aging peel strength (B), after being aged for 96 hours under conditions of 25°C, RH50%, and 5 kg load, to initial peel strength (A) for a stainless steel may be 70% or less, as measured according to a FINAT Test Method FTM 2 standard.

Specifically, according to the FINAT Test Method FTM 2 standard, an acrylic emulsion pressure-sensitive adhesive label specimen for clothing is attached to a stainless steel plate by reciprocating a 2 kg roller once at a speed of about 300 mm/min, and then aged at room temperature for about 20 minutes, and the initial peel strength (A) was measured while performing 90° peeling at a speed of about 300 mm/min using a TA Texture Analyzer.

Next, an acrylic emulsion pressure-sensitive adhesive label specimen for clothing is attached to a stainless steel plate by reciprocating a 2 kg roller once at a speed of about 300 mm/min, and then aged for 96 hours under conditions of 25°C, RH50%, and 5 kg load, and the aging peel strength (B) was measured while performing 90° peeling at a speed of about 300 mm/min using a TA Texture Analyzer. Finally, a ratio (%) thereof was determined.

When the ratio of ((B-A)/A*100) satisfies 70% or less, an adhesive strength build-up phenomenon, in which adhesive strength is rapidly increased after long-term storage, is remarkably reduced, and the ratio may be preferably 65% or less, or 60% or less.

The adhesive member may be applied to adhesive sheets for clothing. Therefore, when the pressure-sensitive adhesive is removed after being attached to a fabric, it is possible to reduce the residual rate of the pressure-sensitive adhesive while satisfying physical properties equal to or higher than those of the existing pressure-sensitive adhesives.

Hereinafter, the actions and effects of the present invention will be described in more detail with reference to the specific exemplary embodiments of the present invention. However, these exemplary embodiments are for illustrative purposes only, and the scope of the present invention is not intended to be limited thereby in any sense.

**<Example>**

**Example 1**

A pre-emulsion was prepared by mixing a monomer mixture, an internal crosslinking agent, an emulsifier, and water as follows, and then the pre-emulsion was mixed with an external crosslinking agent and a polymerization initiator, and this mixture was subjected to emulsion polymerization to prepare an acrylic emulsion resin composition.

First, to a 2 L-volume glass reactor equipped with a thermostat, a stirrer, a dropping funnel, a nitrogen feeding tube, and a reflux condenser, 200 g of water and about 1.5 g of 26 wt% sodium polyoxyethylene lauryl ethersulfate (SOJ) as an emulsifier were added. Air inside the reactor was replaced with nitrogen under stirring, and then the temperature was raised to about 80°C under nitrogen atmosphere, and maintained about for 60 minutes.

(Step 1) Separately, about 300.0 g of ethylhexyl acrylate (2-EHA), about 195 g of butyl acrylate (BA), about 96 g of methyl methacrylate (MMA), about 6 g of acrylic acid (AA), and 0.2 g of allyl methacrylate (AMA) as an internal crosslinking agent were put in a 2L beaker, and mixed for about 30 minutes to prepare a monomer mixture.

To the monomer mixture, a solution composed of about 23 g of 26 wt% sodium polyoxyethylene lauryl ether sulfate (SOJ), about 2 g of sodium carbonate, and about 185 g of water was added, and mixed with a stirrer to prepare a milky pre-emulsion.

(Step 2-1) To the 2L-volume glass reactor containing the emulsifier, about 6 g of about 5 wt% ammonium persulfate (APS) was introduced and dissolved under stirring for about 10 minutes. Further, to the glass reactor, the prepared pre-emulsion and about 36 g of about 5 wt% aqueous solution of ammonium persulfate were continuously added in an equal ratio for about 6 hours. At about 4 hours after initiation of the polymerization, about 35% aqueous solution of diacetone acrylamide (DAAM) was prepared as a first external crosslinking agent, and about 12 g thereof was introduced to the pre-emulsion.

(Step 2-2) The reactor was maintained at a temperature of about 80 °C for about 1 hour, and then cooled to room temperature (about 25°C), and about 42 g of about 10% of adipic acid dihydrazide (ADH) as a second external crosslinking agent was added to the reactor, and mixed for 2 hours to prepare an acrylic emulsion pressure-sensitive adhesive.

Lastly, about 10 wt% aqueous sodium hydroxide solution was added to the acrylic emulsion pressure-sensitive adhesive composition to adjust pH at about 7 to about 9.

## Example 2

An acrylic emulsion pressure-sensitive adhesive composition was prepared in the same manner as in Example 1, except that about 21 g of about 10% of adipic acid dihydrazide (ADH) was used instead of about 42 g thereof in the step 2-2 of Example 1.

## Example 3

An acrylic emulsion pressure-sensitive adhesive composition was prepared in the same manner as in Example 1, except that about 36 g of about 10% of adipic acid dihydrazide (ADH) was used instead of about 42 g thereof in the step 2-2 of Example 1.

## Example 4

In the step 2-1 of Example 1, to the 2L-volume glass reactor containing the emulsifier, about 6 g of about 5 wt% ammonium persulfate (APS) was introduced and dissolved under stirring for about 10 minutes. Further, to the glass reactor, the prepared pre-emulsion and about 60 g of about 5 wt% aqueous solution of ammonium persulfate were continuously added in an equal ratio for about 6 hours. At about 4 hours after initiation of the polymerization, about 35% aqueous solution of diacetone acrylamide (DAAM) was prepared as a first external crosslinking agent, and about 12 g thereof was introduced to the pre-emulsion.

Next, an acrylic emulsion pressure-sensitive adhesive composition was prepared in the same manner as in Example 1, except that about 36 g of about 10% of adipic acid dihydrazide (ADH) was used instead of about 42 g thereof in the step 2-2 of Example 1.

## Example 5

An acrylic emulsion pressure-sensitive adhesive composition was prepared in the same manner as in Example 1, except that about 8.6 g of about 35% aqueous solution of diacetone acrylamide (DAAM) was used as a first external crosslinking agent instead of about 12 g thereof in the step 2-1 of Example 1, and about 30 g of about 10% of adipic acid dihydrazide (ADH) was used as a second external crosslinking agent instead of about 42 g thereof in the step 2-2 of Example 1.

**Comparative Example 1**

In the step 1 of Example 1, about 537 g of butyl acrylate (BA), about 30 g of styrene (SM), and about 30 g of vinyl acetate (Vac) as a monomer mixture, and 0.2 g of allyl methacrylate (AMA) as an internal crosslinking agent were introduced, and mixed for about 30 minutes to prepare a monomer mixture.

**Comparative Example 2**

An acrylic emulsion pressure-sensitive adhesive composition was prepared in the same manner as in Example 1, except that about 17 g of about 35% aqueous solution of diacetone acrylamide (DAAM) was used as a first external crosslinking agent instead of about 12 g thereof in the step 2-1 of Example 1, and the aqueous solution of adipic acid dihydrazide (ADH) as a second external crosslinking agent was not used in the step 2-2 of Example 1.

**Comparative Example 3**

An acrylic emulsion pressure-sensitive adhesive composition was prepared in the same manner as in Example 1, except that allyl methacrylate (AMA) as an internal crosslinking agent was not used in the step 1 of Example 2.

**Comparative Example 4**

An acrylic emulsion pressure-sensitive adhesive composition was prepared in the same manner as in Example 1, except that the aqueous solution of diacetone acrylamide (DAAM) as a first external crosslinking agent was not used in the step 2-1 of Example 1, and the aqueous solution of adipic acid dihydrazide (ADH) as a second external crosslinking agent was not used in the step 2-2 of Example 1.

**Experimental Example 1 : Physical properties of acrylic emulsion pressure-sensitive adhesive composition**

1-1. Measurement of gel content and sol content

Each of the emulsion pressure-sensitive adhesive compositions prepared in Examples and Comparative Examples was coated onto a release paper such that a film thickness after drying was 28 $\mu$m, followed by drying at 120 °C for 1 minute, and then each dry product peeled from the release paper was cut to prepare about 0.3 g of each sample.
A weight (G1) after drying the sample at 110°C for 1 hour was measured, and the dried sample was immersed in THF at room temperature for 24 hours, and insolubles were filtered and separated using a 325 mesh steel net. The separated insolubles were dried at 110°C for 1 hour, and then a weight (G2) was measured. A gel content and a sol content were calculated according to the following Equations 1 and 2. The calculated values are summarized in Table 1. The sol content refers to dissolved solubles which are obtained after drying the acrylic pressure-sensitive adhesive composition and immersing the dry product in tetrahydrofuran for 24 hours.

$$[\text{Equation 1}]$$

$$\text{Gel content}(\%)=(G2/G1) \times 100$$

$$[\text{Equation 2}]$$

$$\text{Sol content}(\%)= (G1-G2) / G1 \times 100$$

1-2. Measurement of low-molecular-weight (100,000 q/mol)

sol content

The residues (solubles) filtered after immersion in THF in 1-1 were collected and measured. The residues were diluted at appropriate concentrations, and then filtered to prepare samples for gel permeation chromatography (GPC). Thereafter, the weight average molecular weight (Mw) and molecular weight distribution (PDI) were measured using GPC under the following conditions.

To create a calibration curve, the measurement results were converted using polystyrene standards of the Agilent system.

<Measurement conditions>

Measuring instrument: Agilent GPC (Agilent 1200 series, USA)

Column: two PL Mixed B connected

Column temperature: 40°C

Eluent: Tetrahydrofuran

Flow rate: 1.0 mL/min

Concentration: ~ 1 mg/mL (100 μL injection)

The sol content of a weight average molecular weight of less than 100,000 g/mol may be calculated using the molecular weight distribution (PDI) value. In detail, the sol content may be calculated using the following equation: on the molecular weight distribution curve, (the area of the low molecular weight of less than 100,000 g/mol / the total area) * 100. The sol content of a weight average molecular weight of less than 100,000 g/mol is summarized in Table 1.

[Table 1]

| Section | Example | | | | | Comparative Example | | | |
|---|---|---|---|---|---|---|---|---|---|
| | 1 | 2 | 3 | 4 | 5 | 1 | 2 | 3 | 4 |
| Gel content% | 76 | 74 | 69 | 67 | 70 | 59 | 54 | 63 | 52 |
| Sol content% | 24 | 26 | 37 | 33 | 30 | 41 | 46 | 37 | 48 |
| Low-molecular-weight sol content% (based on total sol content) | 58 | 58 | 60 | 63 | 61 | 76 | 74 | 71 | 75 |

**Experimental Example 2 : Evaluation of adhesive properties**

Each of the pressure-sensitive adhesive compositions prepared in Examples and Comparative Examples was coated onto a silicone-coated release paper, and dried in an oven at about 120 °C for 1 minute such that each adhesive layer had a thickness of about 16 μm. This layer was laminated with a BOPP film (Bi-Axially Oriented PP Film) to prepare a label for clothing, which was then cut in a size of 1 inch x 150 mm to prepare a label specimen for clothing.

Adhesive properties of the label specimens for clothing, in which the acrylic emulsion pressure-sensitive adhesive compositions prepared in Examples and Comparative Examples were used, were tested by the following methods. The results are shown in Table 2 below.

2-1. Test of initial peel strength (N/inch)

According to the FINAT Test Method No. 2, each acrylic emulsion pressure-sensitive adhesive label specimen for clothing was attached to a stainless steel plate by reciprocating a 2 kg roller once at a speed of about 300 mm/min, and then aged at room temperature for about 20 minutes, and the initial peel strength (A) was measured while performing 90° peeling at a speed of about 300 mm/min using a TA Texture Analyzer.

2-2. Test of aging peel strength (N/inch)

Each label specimen was attached to a bright stainless steel plate (SUS) substrate, and then the attached specimen was pressed with about 5 kg load in a thermo-hygrostat at a temperature of 25°C and relative humidity of 50%, and left for 4 days, and then the aging peel strength(B) was measured in the same manner as in the peel strength test of 2-1.

2-3. Test of build-up

A ratio ((B-A)/A*100, %) of the aging peel strength(B) measured in 2-2 to the initial peel strength(A) measured in 2-1 was determined.

Through the ratio of change, the degree of build-up of the pressure-sensitive adhesive may be determined. When the degree exceeds 70%, it may be determined that the adhesive is not suitable as a pressure-sensitive adhesive for clothing due to the build-up.

2-4. Test of peel strength (N/inch) and residual rate(%) for clothing fabric

- Sample size: 1 inch X 150 mm
- Adherend: 100% cotton fabric or 100% polyester fabric
- Measurement conditions: 25±2°C, 50±5%RH
- Measurement method: The label sample was pressed five times with a roller having a load of about 5 kg on a selected adherend, and sandwiched between glasses using a glass specimen (4 to 5 samples were laminated). Then, the attached sample is pressed with a load of about 10 kg in a thermo-hygrostat at a temperature of about 60 °C and a relative humidity of 95%, and aged for 2 days. The sample thus aged for 2 days was taken and a load of about 5 kg was applied thereto, and left in a thermo-hygrostat (25±2°C, 50±5%RH) for about 24 hours, and then taken therefrom. A peel strength was measured using Texture Analyzer (TA) while peeling the label sample at 180° and a speed of about 300 mm/min.

Further, after peeling, the residual rate was measured by the amount of pressure-sensitive adhesive remaining on the clothing fabric substrate (size sticker test of clothing was performed in the same manner as the analysis method of KOTITI clothing testing institute). The clothing testing institute measured the residual rate, etc. by observing the appearance of the pressure-sensitive adhesive with the naked eyes and the presence or absence of adhesive strength, damage of clothing, and color change of clothing by hand.

[Table 2]

| Section | 90° peel (N/inch, SUS) | | | 180° peel (N/inch, clothing fabric) | | | |
|---|---|---|---|---|---|---|---|
| | Initial peel strength (A) | Aging peel strength (B) | Ratio of change (%) | Peel strength (100% cotton) | Peel strength (100% polyester) | Residual rate (100% cotton) | Residual rate (100% polyester) |
| Example 1 | 3.8 | 5.5 | 45 | 0.6 | 1.4 | 0 | 0 |
| Example 2 | 3.9 | 5.7 | 46 | 0.6 | 1.4 | 0 | 0 |
| Example 3 | 4.2 | 6.0 | 43 | 0.8 | 1.4 | 0 | 0 |
| Example 4 | 4.7 | 7.5 | 60 | 1.0 | 1.6 | 0 | 0 |
| Example 5 | 4.0 | 6.0 | 50 | 0.7 | 1.5 | 0 | 0 |
| Comparative Example 1 | 5.7 | 15.1 | 165 | 1.3 | 2.0 | 20 | 80 |
| Comparative Example 2 | 5.7 | 14.0 | 146 | 1.4 | 2.1 | 30 | 90 |
| Comparative Example 3 | 5.3 | 13.0 | 138 | 1.2 | 1.9 | 15 | 70 |
| Comparative Example 4 | 5.8 | 15.0 | 159 | 1.4 | 2.0 | 30 | 90 |

As shown in Table 1, Examples of the present invention, in which the sol-gel property, in particular, the low-molecular-weight sol content in the composition was controlled in the specific range, exhibited excellent adhesive strength while exhibiting a remarkably reduced adhesive strength build-up phenomenon even after being stored for a long time.

Comparative Examples that deviate from the sol-gel property of the present invention exhibited the remarkably high peel strength and generated residues, as compared with Examples, and thus they may generate problems such as appearance defects, etc., when removing the pressure-sensitive adhesive. @@@

**Claims**

1. An acrylic emulsion pressure-sensitive adhesive composition comprising an emulsion polymer of a monomer mixture including a (meth)acrylic acid ester-based first monomer including an alkyl group having 1 to 14 carbon atoms and an unsaturated carboxylic acid-based second monomer; an external crosslinking agent including diacetone acrylamide and adipic acid dihydrazide; an internal crosslinking agent; and a polymerization initiator,

   wherein a gel content(%) represented by the following Equation 1 is 60% to 85%,
   a sol content(%) represented by the following Equation 2 is 15% to 40%, and
   a content of a sol having a weight average molecular weight of less than 100,000 g/mol with respect to the total sol content is less than 70% by weight:

$$[\text{Equation 1}]$$

$$\text{Gel content(\%)}= (G2 / G1) \times 100$$

$$[\text{Equation 2}]$$

$$\text{Sol content(\%)}= (G1-G2) / G1 \times 100$$

   in equations, G1 represents the weight after drying the acrylic emulsion pressure-sensitive adhesive composition, and G2 represents the dry weight of insolubles separated by filtration using a 325 mesh, after drying the acrylic pressure-sensitive adhesive composition and immersing the dry product in tetrahydrofuran for 24 hours.

2. The acrylic emulsion pressure-sensitive adhesive composition of claim 1,
   wherein the diacetone acrylamide is included in an amount of 0.3 parts by weight to 0.9 parts by weight with respect to 100 parts by weight of the monomer mixture.

3. The acrylic emulsion pressure-sensitive adhesive composition of claim 1,
   wherein the adipic acid dihydrazide is included in an amount of 0.15 parts by weight to 0.9 parts by weight with respect to 100 parts by weight of the monomer mixture.

4. The acrylic emulsion pressure-sensitive adhesive composition of claim 1,
   wherein the internal crosslinking agent is one or more selected from the group consisting of allyl methacrylate, polyethylene glycol diacrylate, polycarbodiimide, allyl-N-methyl carbamate, 1,6-hexanediol diacrylate, hexanediolethoxylate diacrylate, hexanediolpropoxylate diacrylate, pentaerythritolethoxylate triacrylate, pentaerythritolpropoxylate triacrylate, vinyltrimethoxysilane, and divinylbenzene.

5. The acrylic emulsion pressure-sensitive adhesive composition of claim 1,
   wherein the internal crosslinking agent is included in an amount of 0.01 part by weight to 0.06 parts by weight with respect to 100 parts by weight of the monomer mixture.

6. The acrylic emulsion pressure-sensitive adhesive composition of claim 1,
   wherein the polymerization initiator is one or more selected from the group consisting of potassium persulfate, sodium persulfate, ammonium persulfate, cumene hydroperoxide, and benzoyl peroxide.

7. The acrylic emulsion pressure-sensitive adhesive composition of claim 1,
   wherein the polymerization initiator is included in an amount of 0.15 parts by weight to 0.6 parts by weight with respect to 100 parts by weight of the monomer mixture.

8. The acrylic emulsion pressure-sensitive adhesive composition of claim 1,
wherein the first monomer is one or more selected from the group consisting of methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, octyl (meth)acrylate, isooctyl (meth)acrylate, 2-ethylhexyl (meth)acrylate, decyl (meth)acrylate, isodecyl (meth)acrylate, dodecyl (meth)acrylate, isobornyl (meth)acrylate, and lauryl (meth)acrylate.

9. The acrylic emulsion pressure-sensitive adhesive composition of claim 1,
wherein the second monomer is one or more selected from the group consisting of (meth)acrylic acid, fumaric acid, maleic acid, itaconic acid, crotonic acid, citraconic acid, mesaconic acid, glutaconic acid, and allylmalonic acid.

10. The acrylic emulsion pressure-sensitive adhesive composition of claim 1,
wherein the first monomer includes 5% by weight to 30% by weight of methyl(meth)acrylate, 10% by weight to 50% by weight of butyl(meth)acrylate, and 30% by weight to 80% by weight of 2-ethylhexyl(meth)acrylate with respect to the total content of the first monomer.

11. A method of preparing the acrylic emulsion pressure-sensitive adhesive composition of claim 1, the method comprising:

the step 1 of preparing a pre-emulsion by mixing a monomer mixture including a (meth)acrylic acid ester-based first monomer including an alkyl group having 1 to 14 carbon atoms and an unsaturated carboxylic acid-based second monomer, an internal crosslinking agent, an emulsifier, and a solvent; and
the step 2 of preparing an acrylic emulsion resin by mixing the prepared pre-emulsion with an external crosslinking agent including diacetone acrylamide and adipic acid dihydrazide, and a polymerization initiator, and then performing an emulsion polymerization of the mixture.

12. The method of claim 11,

wherein the step 2 includes the step 2-1 of introducing the polymerization initiator and diacetone acrylamide as a first external crosslinking agent to the pre-emulsion prepared in the step 1 to perform an emulsion polymerization; and
the step 2-2 of introducing the adipic acid dihydrazide as a second external crosslinking agent to the emulsion polymerization product.

13. The method of claim 11,
wherein the step 2-1 is performed at 70°C to 90°C.

14. The method of claim 11,
wherein the step 2-2 is performed at 20°C to 50°C.

15. An adhesive member comprising

a substrate; and
an adhesive layer which is formed on at least one surface of the substrate,
wherein the adhesive layer is formed using the acrylic emulsion pressure-sensitive adhesive composition of claim 1.

16. The adhesive member of claim 15,
wherein a ratio of aging peel strength (B), after being aged for 96 hours under conditions of 25°C, RH50%, and 5 kg load, to initial peel strength (A) for a stainless steel is 70% or less, as measured according to a FINAT Test Method FTM 2 standard.

## INTERNATIONAL SEARCH REPORT

| International application No. |
| --- |
| **PCT/KR2020/013199** |

### A.  CLASSIFICATION OF SUBJECT MATTER

**C09J 133/04**(2006.01)i; **C09J 4/00**(2006.01)i; **C09J 7/38**(2018.01)i; **C08F 2/44**(2006.01)i; **C08F 220/18**(2006.01)i; **C08F 220/04**(2006.01)i; **C08K 5/25**(2006.01)i; **C08K 5/00**(2006.01)i; **C08K 5/20**(2006.01)i

According to International Patent Classification (IPC) or to both national classification and IPC

### B.  FIELDS SEARCHED

Minimum documentation searched (classification system followed by classification symbols)

C09J 133/04(2006.01); A61K 9/70(2006.01); C08F 2/22(2006.01); C09J 133/02(2006.01); C09J 133/06(2006.01); C09J 133/08(2006.01); C09J 163/00(2006.01); C09J 7/02(2006.01); C09J 7/20(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 점착제(adhesives), 메틸(메트)아크릴레이트(methylmethacrylate), 카르복실산 (carboxylic acid), 가교제(cross linking agent), 졸(sol), 겔(gel)

### C.  DOCUMENTS CONSIDERED TO BE RELEVANT

| Category* | Citation of document, with indication, where appropriate, of the relevant passages | Relevant to claim No. |
| --- | --- | --- |
| Y | KR 10-2019-0072421 A (LG CHEM, LTD.) 25 June 2019 (2019-06-25)<br>See claims 1 and 5; and paragraphs [0011], [0055], [0073], [0087], [0123], [0125] and [0153]-[0157]. | 1-16 |
| Y | JP 2003-064336 A (NITTO DENKO CORP.) 05 March 2003 (2003-03-05)<br>See abstract, claim 1, and paragraph [0005]. | 1-16 |
| A | KR 10-1899377 B1 (LINTEC CORPORATION) 17 September 2018 (2018-09-17)<br>See claim 1. | 1-16 |
| A | JP 4672118 B2 (SAIDEN CHEMICAL IND. CO., LTD.) 20 April 2011 (2011-04-20)<br>See claim 1. | 1-16 |
| A | JP 2001-164221 A (NITTO DENKO CORP.) 19 June 2001 (2001-06-19)<br>See claim 1. | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 January 2021** | **08 January 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2020/013199**

| Patent document cited in search report | | | Publication date (day/month/year) | Patent family member(s) | | | Publication date (day/month/year) |
|---|---|---|---|---|---|---|---|
| KR | 10-2019-0072421 | A | 25 June 2019 | CN | 111032810 | A | 17 April 2020 |
| | | | | EP | 3650513 | A1 | 13 May 2020 |
| | | | | US | 2020-0199414 | A1 | 25 June 2020 |
| | | | | WO | 2019-117539 | A1 | 20 June 2019 |
| JP | 2003-064336 | A | 05 March 2003 | AT | 282438 | T | 15 December 2004 |
| | | | | AU | 2002-301123 | B2 | 23 November 2006 |
| | | | | CA | 2399344 | A1 | 23 February 2003 |
| | | | | CA | 2399344 | C | 11 August 2009 |
| | | | | CN | 1215885 | C | 24 August 2005 |
| | | | | CN | 1406635 | A | 02 April 2003 |
| | | | | DE | 60201948 | T2 | 03 November 2005 |
| | | | | DK | 1285670 | T3 | 28 February 2005 |
| | | | | EP | 1285670 | A2 | 26 February 2003 |
| | | | | EP | 1285670 | A3 | 17 December 2003 |
| | | | | EP | 1285670 | B1 | 17 November 2004 |
| | | | | ES | 2227370 | T3 | 01 April 2005 |
| | | | | JP | 4799778 | B2 | 26 October 2011 |
| | | | | PT | 1285670 | E | 31 January 2005 |
| | | | | US | 2003-0114621 | A1 | 19 June 2003 |
| | | | | US | 6777518 | B2 | 17 August 2004 |
| KR | 10-1899377 | B1 | 17 September 2018 | CN | 103146323 | A | 12 June 2013 |
| | | | | JP | 2012-214546 | A | 08 November 2012 |
| | | | | JP | 5758673 | B2 | 05 August 2015 |
| | | | | KR | 10-2012-0112021 | A | 11 October 2012 |
| | | | | TW | 201245389 | A | 16 November 2012 |
| | | | | TW | 201708467 | A | 01 March 2017 |
| | | | | TW | I618773 | B | 21 March 2018 |
| | | | | TW | I634188 | B | 01 September 2018 |
| JP | 4672118 | B2 | 20 April 2011 | JP | 2002-047468 | A | 12 February 2002 |
| JP | 2001-164221 | A | 19 June 2001 | JP | 4705214 | B2 | 22 June 2011 |

Form PCT/ISA/210 (patent family annex) (July 2019)

**EP 3 910 037 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190121166